Europäisches Patentamt

European Patent Office

Office européen des brevets

(19)

(11) Numéro de publication: **0 067 074**
**B1**

(12) **FASCICULE DE BREVET EUROPEEN**

(45) Date de publication du fascicule du brevet:
01.08.84

(51) Int. Cl.³: **C 04 B 11/14**

(21) Numéro de dépôt: **82400196.0**

(22) Date de dépôt: **04.02.82**

(54) **Composition hydrofuge pour le traitement dans la masse du plâtre ou d'un produit à base de plâtre et procédé correspondant.**

(30) Priorité: **05.06.81 FR 8111230**

(43) Date de publication de la demande:
**15.12.82 Bulletin 82/50**

(45) Mention de la délivrance du brevet:
**01.08.84 Bulletin 84/31**

(84) Etats contractants désignés:
**AT BE CH DE GB IT LI LU NL SE**

(56) Documents cités:
**AT - B - 347 842**
**BE - A - 508 445**
**CH - A - 346 150**
**FR - A - 1 166 625**
**FR - A - 2 069 465**

(73) Titulaire: **SOCIETE POUR LE DEVELOPPEMENT DE LA RECHERCHE INDUSTRIELLE "SODRI", 82, rue Lauriston, F-75016 Paris (FR)**

(72) Inventeur: **Kerserho, François, 16, rue Musselburgh, F-94500 Champigny (FR)**

(74) Mandataire: **Peuscet, Jacques, 3, Square de Maubeuge, F-75009 Paris (FR)**

## Description

On sait qu'il est souvent souhaitable de traiter dans la masse le plâtre ou un produit à base de plâtre, tel que des agglomérés plâtre-fibres, de façon à protéger le matériau fini contre la pénétration d'eau provenant, par exemple, de remontées d'eau du sol. Un tel traitement dans la masse a lieu au moment de la confection du plâtre, en ajoutant une composition hydrofuge dans l'eau de gâchage.

Parmi les substances hydrofuges qui ont déjà été utilisées, on peut mentionner les siliconates de potassium ou de sodium. Ces produits ont pour inconvénient, en raison de leur alcalinité, de produire des efflorescences en surface, voire de petits cratères dus à la présence de carbonates solubles. On a aussi essayé des résines silicone en poudre, mais leur mise en œuvre est délicate en raison de la différence de densité des poudres pouvant aller de 1 à 3 et aussi de la nécessité d'utiliser des réticulants ou des catalyseurs en poudre. On a aussi utilisé des émulsions aqueuses de silicone de différentes natures; mais, dans ce cas, le taux d'hydrofugation pour une consommation raisonnable d'émulsion laisse à désirer et, en outre, la reprise en eau demeure relativement importante (de l'ordre de 5 à 7% alors qu'elle varie entre 15 et 20% pour un plâtre non hydrofugé).

On a aussi envisagé tout récemment d'utiliser des silanes dans des formulations appropriées que l'on incorpore dans l'eau de gâchage du plâtre. Après hydrolyse, les silanes conduisent à la formation *in situ* d'une résine du type silicone. Plusieurs obstacles s'opposent actuellement à l'emploi généralisé de silanes comme produit hydrofuge. En effet, les silanes se présentent sous la forme d'un liquide volatil et toxique, qui n'est pratiquement pas soluble ou dispersible dans l'eau; ils ne peuvent donc pas être utilisés isolément, mais seulement en association avec d'autres ingrédients permettant leur emploi. En outre, les silanes sont relativement chers et doivent donc être mis en œuvre d'une façon optimale, en évitant autant que possible leur perte par évaporation et en favorisant leur contact avec l'eau de gâchage.

Dans une demande de brevet français déposée le 12 décembre 1980 par la société titulaire, on a proposé de mettre en œuvre un silane avec un tiers solvant ayant pour rôle de solubiliser le silane dans l'eau. Grâce au tiers solvant, il se produit un bon contact entre le volume d'eau de gâchage et la faible quantité de silane qui y est ajoutée, d'où l'obtention d'une hydrofugation efficace du plâtre ou du produit à base de plâtre. Toutefois, dans le matériau fini, le tiers solvant, qui est un alcool de faible poids moléculaire, tel que le méthanol ou l'éthanol, ou une cétone, telle que l'acétone, a tendance à s'évaporer et à entraîner avec lui le silane, ce qui se traduit par une perte non négligeable de silane, compte tenu de son prix élevé.

Pour favoriser l'hydrolyse du silane en milieu aqueux et pour assurer simultanément une bonne dispersion de la résine silicone formée dans la masse du plâtre ou du produit à base de plâtre, on a aussi proposé dans la demande de brevet français précitée d'ajouter dans l'eau de gâchage un agent d'acidification faiblement acide, tel que le mono- ou le diphosphate acide de calcium. Mais, si cet agent acide favorise effectivement l'hydrolyse du silane, il a pour inconvénient de retarder la prise du plâtre, alors qu'il est, dans bien des cas, intéressant de chercher au contraire à accélérer cette prise.

La présente invention vise à proposer une composition destinée à être mélangée à l'eau de gâchage du plâtre, qui permette une utilisation optimale du silane qu'elle contient en réduisant sensiblement les pertes de silane par évaporation au moment de la prise et du séchage du plâtre. Un autre but de l'invention est d'effectuer, avec de faibles quantités de silane, une hydrofugation efficace du plâtre ou du produit à base de plâtre, le taux de reprise en humidité de la paroi ainsi hydrofugée étant sensiblement plus réduit que celui que l'on obtient habituellement avec les compositions hydrofuges classiques.

La présente invention a donc pour objet une composition hydrofuge destinée à être incorporée dans l'eau de gâchage d'un plâtre ou d'un produit à base de plâtre, ladite composition renfermant, dans un milieu aqueux, au moins un silane monomère conduisant, après hydrolyse, à la formation d'une résine de type silicone et répondant à la formule générale suivante: $R_x-Si-(OR')_n$, formule dans laquelle R et R' sont indépendamment un radical alkyl inférieur ayant de 1 à 4 atomes de carbone ou un radical phényl, et dans laquelle x et n sont des nombres entiers, dont la somme est égale à 4, x pouvant être nul, caractérisée par le fait qu'elle renferme une dispersion d'au moins un sel d'acide gras insoluble.

La composition hydrofuge selon l'invention peut être préparée en dispersant dans l'eau, sous une forte agitation, un sel d'acide gras insoluble puis en ajoutant le silane qui vient se fixer ou s'adsorber sur les particules de sel d'acide gras dispersées dans l'eau.

Parmi les sels d'acide gras insolubles utilisables dans l'invention, on peut citer les stéarates et les oléates, tels que l'oléate de magnésium, le stéarate de magnésium, d'aluminium ou de calcium. On préfère utiliser les stéarates tels que le stéarate de calcium, en raison de leur bonne disponibilité et de leur faible prix de revient.

La teneur en sel(s) d'acide gras insoluble(s) de la composition hydrofuge est avantageusement comprise entre 10 et 20% en poids par rapport au poids total de la composition.

Le sel d'acide gras insoluble entrant dans la composition selon l'invention est intéressant à plusieurs titres:

— il adsorbe le silane en milieu aqueux;

— il prépare et favorise la réticulation dudit silane; il joue, à cet effet, le rôle d'un agent d'acidification sans avoir pour autant un effet retardateur sur la prise du plâtre;

— il possède en lui-même des propriétés hydrofuges, qui viennent se combiner aux propriétés hydrofuges du silane;

— il constitue un épaississant et un plastifiant non seulement de la formulation selon l'invention, lorsque cette dernière a la consistance d'une pâte, mais encore du plâtre fini, une fois qu'il a été coulé et séché; on observe que l'incorporation de la dispersion de sel(s) d'acide gras insoluble(s), notamment de stéarate de calcium, dans l'eau de gâchage du plâtre donne au produit fini un aspect plus brillant, plus souple, dû à la présence du stéarate.

La composition selon l'invention renferme avantageusement de 0,5 à 5% et, de préférence, de 1 à 2% de silane, ces pourcentages étant exprimés en poids par rapport au poids total de la composition.

Dans une première variante de réalisation, la composition selon l'invention peut renfermer un tiers solvant utilisé pour solubiliser le silane dans l'eau et pris dans le groupe formé par le méthanol, l'éthanol, le propanol, l'isopropanol, des cétones et le diméthylsulfoxyde. Dans une deuxième variante de réalisation, plus particulièrement préférée, la composition selon l'invention renferme, de façon connue en soi, outre le silane, une résine de silicone, notamment de méthylsilicone.

Dans un mode de réalisation particulièrement avantageux, la composition selon l'invention renferme au moins un agent épaississant pris dans le groupe formé par la silice, la bentonite, les alginates, tels que l'alginate de sodium, les dérivés de la cellulose, tels que la méthylcellulose, l'hydroxyéthylcellulose ou leur mélange. L'incorporation d'un agent épaississant non seulement permet de régler la consistance de la composition hydrofuge pour lui donner notamment l'aspect d'une pâte, mais a également pour effet de fixer le silane à l'intérieur de la composition, ce qui l'empêche ainsi de s'évaporer. La teneur en agent(s) épaississant(s) est, d'une façon générale, comprise entre 0,5 et 2% en poids par rapport au poids total de la composition. Les pourcentages ci-dessus indiqués ne sont pas critiques et on peut utiliser sans inconvénient une proportion d'agent(s) épaississant(s) inférieure ou supérieure à la fourchette pondérale susmentionnée.

Selon une autre caractéristique de la composition hydrofuge selon l'invention, cette dernière renferme du plâtre dissous en une quantité comprise entre 1 et 5% en poids par rapport au poids total de la composition. La présence de plâtre dissous présente un triple intérêt: tout d'abord, il joue le rôle d'agent épaississant; c'est ensuite un excellent accélérateur de prise, qui présente, par rapport aux autres accélérateurs de prise, l'avantage d'être d'un faible prix de revient; enfin, il n'a bien entendu aucun effet secondaire dans le produit fini en plâtre ou à base de plâtre.

La composition selon l'invention peut être peu consistante et avoir l'aspect d'un lait ou très consistante et avoir l'aspect d'une pâte malléable. D'une façon générale, sa teneur en eau est comprise entre 60 et 90% en poids par rapport au poids total de la composition. Dans tous les cas, la composition selon l'invention peut être aisément mélangée, même sous une faible agitation, à l'eau de gâchage du plâtre ou du produit à base de plâtre.

La présente invention a également pour objet un procédé d'hydrofugation dans la masse d'un plâtre ou d'un produit à base de plâtre, caractérisé par le fait que l'on ajoute dans l'eau de gâchage du plâtre ou du produit à base de plâtre d'environ 2 à environ 10% de la composition ci-dessus définie, ces pourcentages étant exprimés en poids par rapport au poids du plâtre ou du produit à base de plâtre à gâcher.

D'autres avantages et caractéristiques de l'invention apparaîtront à la lecture de la description suivante, faite à titre d'exemple non limitatif.

*Exemple 1:*

On mélange sous une forte agitation les ingrédients suivants (les pourcentages étant exprimés en poids par rapport au poids total de la composition):

| | |
|---|---|
| Stéarate de calcium | 20% |
| Méthylcellulose | 1% |
| Silane répondant à la formule $CH_3Si(OCH_3)_3$ (poids moléculaire 136; pureté d'environ 95%; densité de 0,9) | 5% |
| Plâtre dissous | 2% |
| Bentonite | 2% |
| Eau | 70% |

Le mélange est effectué en introduisant en dernier lieu le silane; l'agitation énergique est poursuivie jusqu'à l'obtention d'une pâte plastique homogène pouvant être aisément dissoute dans l'eau de gâchage du plâtre.

Dans cet exemple, la pâte hydrofuge ci-dessus est utilisée dans une proportion pondérale d'environ 2% par rapport au plâtre à gâcher. Le plâtre étant gâché et coulé, on lui laisse faire sa prise.

On observe que la reprise en eau du plâtre hydrofugé est inférieure à 0,5% alors que le plâtre témoin préparé dans des conditions identiques a une reprise en eau d'environ 20%. La mesure de la reprise d'eau du plâtre est effectuée selon la norme.

*Exemple 2:*

On mélange sous une forte agitation les ingrédients suivants (les pourcentages ci-après étant exprimés en poids par rapport au poids total de la composition):

| | |
|---|---|
| Stéarate d'aluminium | 15% |
| Plâtre | 2% |
| Silice | 2% |
| Alginate d'aluminium | 5% |
| Méthylsilicone | 1% |
| Silane répondant à la formule $CH_3Si(OCH_3)_3$ (poids moléculaire 136; pureté d'environ 95%; densité de 0,9) | 4% |
| Eau | 71% |

Comme précédemment, le silane est introduit en dernier lieu; l'agitation énergique est poursuivie jusqu'à l'obtention d'une pâte plastique homogène, qui peut être aisément dissoute dans l'eau de gâchage du plâtre.

La pâte hydrofuge ci-dessus est utilisée dans une proportion pondérale d'environ 2% par rapport au plâtre à gâcher. Le plâtre étant gâché et coulé, on lui laisse faire sa prise. La reprise en eau du plâtre hydrofugé est inférieure à 0,5%.

Il est bien entendu que les modes de réalisation ci-dessus décrits ne sont aucunement limitatifs et pourront donner lieu à toutes modifications désirables, sans sortir pour cela du cadre de l'invention.

## Revendications:

1. Composition hydrofuge destinée à être incorporée dans l'eau de gâchage d'un plâtre ou d'un produit à base de plâtre, ladite composition renfermant, dans un milieu aqueux, au moins un silane monomère conduisant, après hydrolyse, à la formation d'une résine de type silicone et répondant à la formule générale suivante: $R_x-Si-(OR')_n$, formule dans laquelle R et R' sont indépendamment un radical alkyl inférieur ayant de 1 à 4 atomes de carbone ou un radical phényl, et dans laquelle x et n sont des nombres entiers dont la somme est égale à 4, x pouvant être nul, caractérisée par le fait qu'elle renferme une dispersion d'au moins un sel d'acide gras insoluble.

2. Composition selon la revendication 1, caractérisée par le fait que le sel d'acide gras insoluble est pris dans le groupe formé par les stéarates et les oléates.

3. Composition selon la revendication 2, caractérisée par le fait que le sel d'acide gras insoluble est un stéarate de calcium ou d'aluminium.

4. Composition selon l'une des revendications 1 à 3, caractérisée par le fait qu'elle renferme de 0,5 à 5% de silane et de 10 à 20% de sel d'acide gras insoluble, ces pourcentages étant exprimés en poids par rapport au poids total de la composition.

5. Composition selon l'une des revendications 1 à 4, caractérisée par le fait qu'elle renferme, en poids par rapport au poids total de la composition, de 0,5 à 2% d'au moins un agent épaississant pris dans le groupe formé par la silice, la bentonite, les alginates, les dérivés de la cellulose ou leur mélange.

6. Composition selon l'une des revendications 1 à 5, caractérisée par le fait qu'elle renferme de 1 à 5% en poids de plâtre dissous, ces pourcentages étant exprimés par rapport au poids total de la composition.

7. Composition selon l'une des revendications 1 à 6, caractérisée par le fait que sa teneur en eau est comprise entre 60 et 90% en poids par rapport au poids total de la composition.

8. Composition selon l'une des revendications 1 à 7, caractérisée par le fait qu'elle renferme un tiers solvant permettant de solubiliser le silane dans l'eau, ce tiers solvant étant pris dans le groupe formé par le méthanol, l'éthanol, le propanol, l'isopropanol, des cétones et le diméthylsulfoxyde.

9. Composition selon l'une des revendications 1 à 7, caractérisée par le fait qu'elle contient une résine de silicone, notamment de méthylsilicone.

10. Procédé d'hydrofugation dans la masse d'un plâtre ou d'un produit à base de plâtre, caractérisé par le fait que l'on incorpore, dans l'eau de gâchage du plâtre ou du produit à base de plâtre, d'environ 2 à environ 10% de la composition selon l'une des revendications 1 à 9, les pourcentages précités étant exprimés en poids par rapport au poids du plâtre ou du produit à base de plâtre à gâcher.

## Patentansprüche:

1. Wasserabweisender Zusatzstoff, der dazu bestimmt ist, in das Anmachwasser eines Gipses oder eines Produkts auf Basis von Gips eingemischt zu werden, und in einem wässerigen Medium wenigstens ein monomeres Silan enthält, das nach Hydrolyse zur Bildung eines Harzes vom Silicontyp führt und der allgemeinen Formel $R_x-Si-(OR')_n$ entspricht, in der R und R' unabhängig ein niederer Alkylrest mit 1 bis 4 Kohlenstoffatomen oder ein Phenylrest sind, und in der x und n ganze Zahlen sind, deren Summe gleich 4 ist, wobei x Null sein kann, dadurch gekennzeichnet, dass er eine Dispersion wenigstens eines unlöslichen Fettsäuresalzes enthält.

2. Zusatzstoff nach Anspruch 1, dadurch gekennzeichnet, dass das unlösliche Fettsäuresalz aus der durch die Stearate und Oleate gebildeten Gruppe genommen ist.

3. Zusatzstoff nach Anspruch 2, dadurch gekennzeichnet, dass das unlösliche Fettsäuresalz ein Calcium- oder Aluminiumstearat ist.

4. Zusatzstoff nach einem der Ansprüche 1 bis 3, dadurch gekennzeichnet, dass er 0,5 bis 5% Silan und 10 bis 20% unlösliches Fettsäuresalz umfasst, wobei diese Prozentsätze als Gewichtsprozent, bezogen auf das Gesamtgewicht des Zusatzstoffs, ausgedrückt sind.

5. Zusatzstoff nach einem der Ansprüche 1 bis 4, dadurch gekennzeichnet, dass er, in Gewichtsprozent auf das Gesamtgewicht des Zusatzstoffs, 0,5 bis 2% wenigstens eines Verdickungsmittels umfasst, das aus der durch Siliciumdioxid, Bentonit, die Alginate, die Cellulosederivate oder ihre Mischung gebildeten Gruppe genommen ist.

6. Zusatzstoff nach einem der Ansprüche 1 bis 5, dadurch gekennzeichnet, dass er 1 bis 5 Gew.-% gelösten Gips umfasst, wobei diese Prozentsätze im Verhältnis zum Gesamtgewicht des Zusatzstoffs ausgedrückt sind.

7. Zusatzstoff nach einem der Ansprüche 1 bis 6, dadurch gekennzeichnet, dass ein Gehalt an Wasser zwischen 60 und 90 Gew.-%, bezogen auf das Gesamtgewicht des Zusatzstoffs, liegt.

8. Zusatzstoff nach einem der Ansprüche 1 bis 7, dadurch gekennzeichnet, dass er einen Lösungsvermittler enthält, der die Löslichmachung des Silans im Wasser ermöglicht und aus der durch Methanol, Ethanol, Propanol, Isopropanol, Ketone und Dimethylsulfoxid gebildeten Gruppe genommen ist.

9. Zusatzstoff nach einem der Ansprüche 1 bis 7, dadurch gekennzeichnet, dass er ein Siliconharz, insbesondere Methylsilicon, enthält.

10. Verfahren zum Wasserabweisendmachen eines Gipses oder eines Produkts auf Basis von Gips in der Masse, dadurch gekennzeichnet, dass man in das Anmachwasser des Gipses oder des Produkts auf Basis von Gips etwa 2 bis etwa 10% des Zusatzstoffs nach einem der Ansprüche 1 bis 9 einmischt, wobei die vorstehend genannten Prozentsätze als Gewichtsprozent, bezogen auf das Gewicht des anzumachenden Gipses oder des Produkts auf Basis von Gips ausgedrückt sind.

## Claims:

1. A waterproofing composition designed to be incorporated in the mixing water for plaster or a plaster-based product, the said composition containing, in an aqueous medium, at least one monomer silane leading, after hydrolysis, to the formation of a silicone-type resin and having the following general formula $R_x - Si - (OR')_n$, wherein R and R' are independently a lower alkyl radical having 1 to 4 carbon atoms or a phenyl radical and in which x and n are whole numbers whose sum is equal to 4, wherein x may be zero, characterised in that it contains a dispersion of at least one insoluble fatty acid salt.

2. A composition as claimed in claim 1, characterised in that the insoluble fatty acid salt is taken from the group formed by the stearates and the oleates.

3. A composition as claimed in claim 2, characterised in that the insoluble fatty acid salt is a calcium or aluminium stearate.

4. A composition as claimed in one of claims 1 to 3, characterised in that it contains 0.5 to 5% of silane and 10 to 20% of insoluble fatty acid salt, these percentages being expressed by weight with respect to the total weight of the composition.

5. A composition as claimed in one of claims 1 to 4, characterised in that it contains, by weight with respect to the total weight of the composition, 0.5 to 2% of at least one thickening agent taken from the group formed by silica, bentonite, the alginates and cellulose derivatives or a mixture thereof.

6. A composition as claimed in one of claims 1 to 5, characterised in that it contains 1 to 5% by weight of dissolved plaster, these percentages being expressed with respect to the total weight of the composition.

7. A composition as claimed in one of claims 1 to 6, characterised in that its water content is between 60 and 90% by weight with respect to the total weight of the composition.

8. A composition as claimed in one of claims 1 to 7, characterised in that it contains a tertiary solvent enabling the solution of the silane in the water, this tertiary solvent being taken from the group formed by methanol, ethanol, propanol, isopropanol, the ketones and dimethyl sulphoxide.

9. A composition as claimed in one of claims 1 to 7, characterised in that it contains a silicone resin, in particular methyl silicone.

10. A waterproofing method for plaster or plaster-based products in bulk, characterised in that approximately 2 to 10% of the composition as claimed in one of claims 1 to 9 is incorporated in the mixing water for the plaster or plaster-based product, the above percentages being expressed by weight with respect to the weight of the plaster or the plaster-based product to be mixed.